# EUROPÄISCHE PATENTSCHRIFT

(11) **EP 2 048 494 B1**
(45) Veröffentlichungstag und Bekanntmachung des Hinweises auf die Patenterteilung: **06.10.2010**
(21) Anmeldenummer: 07019680.3
(22) Anmeldetag: 09.10.2007
(51) Int. Cl.: G01N 21/89, B31F 1/28

(54) **Vorrichtung zur Erfassung der Formatgenauigkeit einer Wellpappebahn**
Device for recording the format fidelity of a corrugated cardboard sheet
Dispositif destiné à la détermination du format précis d'une bande de carton ondulé

(43) Veröffentlichungstag der Anmeldung: 15.04.2009
(73) Patentinhaber: BHS Corrugated Maschinen-und Anlagenbau GmbH, 92729 Weiherhammer (DE)
(72) Erfinder: Kraus, Helmut, 92442 Wackersdorf (DE); Hausner, Markus, 92715 Püchersreuth (DE)
(74) Vertreter: Rau, Manfred

(56) Entgegenhaltungen:
- EP-A- 1 101 601
- EP-A- 1 757 548
- WO-A-02/18123
- DE-A1- 4 031 633

## Beschreibung

Die Erfindung betrifft eine Vorrichtung zur Erfassung der Formatgenauigkeit einer Wellpappebahn nach dem Oberbegriff des Anspruches 1.

Bei einer derartigen aus der EP 1 101 601 A1 (entspr. US-PS 6,836,331) bekannten Vorrichtung sind beiderseits der Wellpappebahn zwei Sensoren angeordnet, von denen ein erster Sensor den Abstand der ersten Deckbahn vom ersten Sensor messend ausgebildet ist und von denen ein zweiter Sensor den Abstand einer zweiten Deckbahn vom zweiten Sensor messend ausgebildet ist. Die zwei Sensoren sind zur Erfassung der Lage von mindestens zwei Profilierungen relativ zueinander angeordnet und synchron zueinander quer zur Transportrichtung der Wellpappebahn verschiebbar ausgebildet. Den Sensoren ist ein Auswerte-Gerät zur Ermittlung des Abstandes der mindestens zwei Profilierungen voneinander nachgeschaltet. Die Messgenauigkeit dieser Vorrichtung ist zufriedenstellend. Nachteilig ist, dass der konstruktive Aufwand zur Querverschiebung der Sensoren aufwändig ist und dass der erforderliche Zeitaufwand für den jeweiligen Messvorgang bezogen auf die hohe Geschwindigkeit von Wellpappebahnen in Wellpappe-Anlagen sehr hoch ist.

Der Erfindung liegt daher die Aufgabe zugrunde, eine Vorrichtung zur Erfassung der Formatgenauigkeit einer in einer Transportrichtung bewegten Wellpappebahn zu schaffen, die eine hohe Mess-Geschwindigkeit und hohe Messgenauigkeit mit einfachem Aufbau verbindet.

Diese Aufgabe wird erfindungsgemäß durch die Merkmale im Kennzeichnungsteil des Anspruches 1 gelöst. Kern der Erfindung ist, dass das schräg zur Oberfläche und quer zur Transportrichtung auf die Oberfläche der oberen Deckbahn gestrahlte Lichtband an den Profilierungen, also an Rillungen und/oder Längsschnitten anders reflektiert wird als in den glatten, d. h. ebenen Bereichen zwischen den Profilierungen. Hiermit kann in einer handelsüblichen Mess-Kamera mit hoher Auflösung ein elektronisches Abbild der Gesamtoberfläche der Wellpappebahn einschließlich der Profilierungen erzeugt werden, das in einem entsprechend programmierten Rechner als Auswerte-Gerät ausgewertet wird, wodurch der jeweilige exakte Istwert der Abstände der einzelnen Profilierungen voneinander ermittelt werden kann.

Durch die Maßnahmen nach Anspruch 2 wird erreicht, dass temperaturbedingte Messfehler in der Kamera kompensiert werden können. Die Kamera erhält also ständig einen exakten Referenzwert für den Abstand zwischen den beiden Referenzpunkten, mittels dessen Messfehler rechnerisch kompensiert werden.

Der Abstand der Kamera von der Oberfläche der Wellpappebahn sollte möglichst groß sein. Der Abstand ist aufgrund baulicher Verhältnisse in Hallen und dergleichen beschränkt. Er sollte aber mindestens nach Anspruch 3 gewählt sein.

Die Ansprüche 4 und 5 geben vorteilhafte Ausgestaltungen für die Anordnung der Lichtquelle wieder.

Die Ansprüche 6 und 7 geben eine besonders einfache vorteilhafte Ausgestaltung der Lichtquelle wieder.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: eine Vorrichtung zur Erfassung der Formatgenauigkeit einer Wellpappebahn in einer schematischen perspektivischen Darstellung und
- Fig. 2: die Vorrichtung nach Fig. 1 in einer Querschnittsdarstellung.

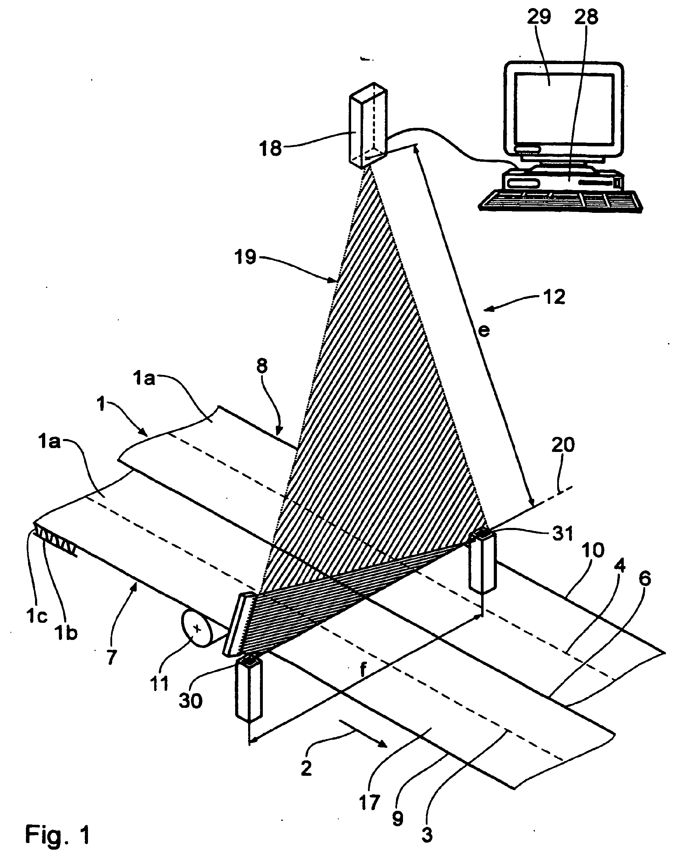

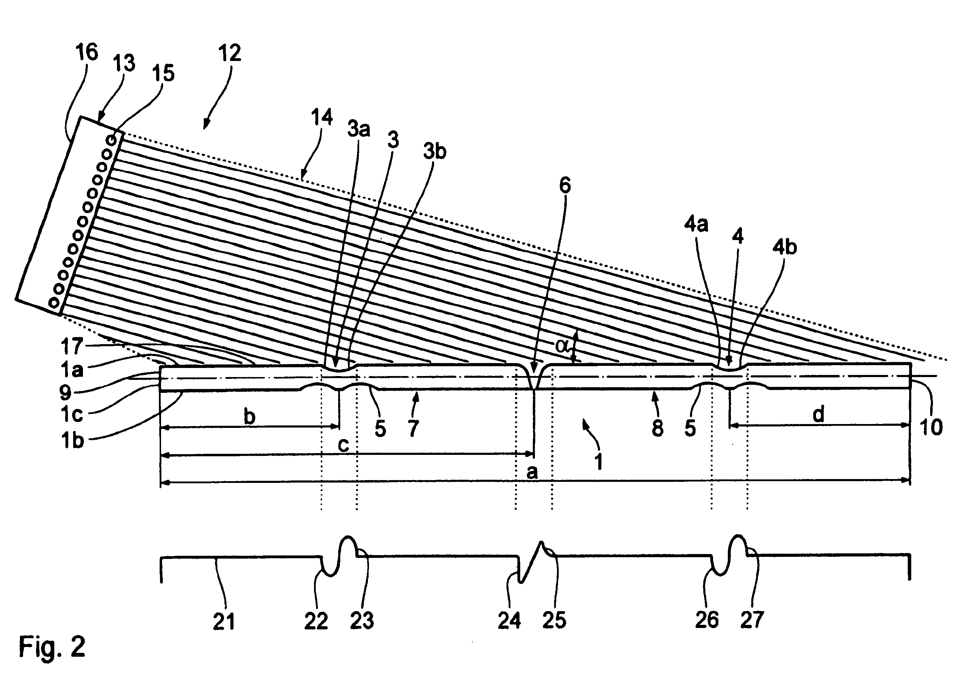

In Fig. 1 und 2 ist schematisch eine Wellpappebahn 1 dargestellt, bei der es sich aber auch um eine normale Pappebahn handeln kann. Die Wellpappebahn 1 weist in üblicher Weise mindestens eine obere glatte Deckbahn 1 a und eine untere ebenfalls glatte Deckbahn 1b auf, zwischen denen eine gewellte Papierbahn 1c angeordnet ist, die mit den Deckbahnen 1 a und 1b verleimt ist. Die Wellpappebahn 1 befindet sich im Zuge ihrer Herstellung auf einer Anlage zur Herstellung von Wellpappe, und zwar in Transportrichtung 2 hinter einer nicht dargestellten Rill- und Längsschneide-Vorrichtung, wie sie beispielsweise in der EP 0 692 369 B1 (entspr. US-PS 5,857,395) dargestellt und beschrieben ist, worauf ausdrücklich verwiesen wird. In dieser Vorrichtung ist die Wellpappebahn 1 mit in Transportrichtung 2 verlaufenden oberen Rillungen 3, 4 und zugeordneten unteren Gegen-Rillungen 5 versehen worden. Weiterhin ist die Wellpappebahn 1 in dieser Vorrichtung mit einem in Transportrichtung 2 verlaufenden Längsschnitt 6 versehen worden, durch den die Wellpappebahn 1 in zwei Teil-Bahnen 7, 8 zerteilt worden ist. Die Wellpappebahn 1 ist weiterhin in der erwähnten Rill- und Längsschneide-Vorrichtung seitlich beschnitten worden, so dass sie zwischen ihren äußeren beschnittenen Seitenkanten 9, 10 eine exakt vorgegebene Gesamtbreite a aufweist.

Die Wellpappebahn 1 ist über eine nur angedeutete exakt zylindrische Walze 11 geführt, so dass sie quer zur Transportrichtung 2 völlig plan, also eben, ist. In Transportrichtung 2 stromabwärts der Walze 11 ist eine Vorrichtung 12 zur Erfassung der Formatgenauigkeit angeordnet, mit der die relevanten Breitenmaße der Wellpappebahn 1 erfasst werden. Bei den Breitenmaßen handelt sich beispielsweise um den Abstand b der Rillung 3 von der Seitenkante 9, den Abstand c des Längsschnitts 6 von der Seitenkante 9 und den Abstand d der Rillung 4 von der benachbarten Seitenkante 10. Grundsätzlich können selbstverständlich auch die Abstände der Rillungen 3, 4 untereinander oder von dem Längsschnitt 6 oder alle Abstände von nur einer Seitenkante 9 oder 10 erfasst werden. Dies ist nur abhängig von der noch zu schildernden Auswertung.

Die Vorrichtung 12 zur Erfassung der Formatgenauigkeit weist eine Lichtquelle 13 auf, die ein Lichtband 14 ausstrahlt, dessen Lichtstrahlen im Wesentlichen parallel zueinander sind. Eine solche Lichtquelle 13 kann beispielsweise aus einer Vielzahl von LED's 15 bestehen, die in einem entsprechenden länglichen Gehäuse 16 in einer geraden Reihe angeordnet sind und angenähert paralleles Licht ausstrahlen. Derartige LED's sind handelsüblich. Die Lichtquelle 13 ist - wie insbesondere Fig. 2 erkennen lässt - seitlich der Wellpappebahn 1 angeordnet, und zwar derart, dass das Lichtband 14 unter einem kleinen Winkel α zwischen dem Lichtband 14 und der ebenen Oberfläche 17 der Wellpappebahn 1 auf die Wellpappebahn 1 auftrifft. Für den Winkel α gilt: 5° ≤ α ≤ 30°.

Oberhalb der Wellpappebahn 1,und zwar mittig über dieser, ist eine digital arbeitende Mess-Kamera 18 angeordnet, die das in Fig. 1 angedeutete, von der Oberfläche 17 der Wellpappebahn 1 reflektierte Licht 19 aufnimmt. Diese Mess-Kamera 18 muss eine sehr hohe Auflösung haben. Ihr Abstand e von der durch das Auftreffen des Licht-Bandes 14 auf die Oberfläche 17 der Wellpappebahn 1 definierte Messlinie 20 ist mindestens so groß wie die Gesamtbreite a der Wellpappebahn 1, möglichst aber größer. Wenn die baulichen Gegebenheiten es nicht zulassen, die Kamera senkrecht über der Messlinie 20 anzuordnen, dann kann die durch die Messlinie 20 und die Kamera 18 definierte Ebene auch in Transportrichtung 2 oder entgegen der Transportrichtung 2 geneigt werden.

Das schräg auf die Oberfläche 17 auftreffende Lichtband 14 wird an den Rillungen 3, 4 und dem Längsschnitt 6 anders reflektiert als an den ebenen Bereichen der Oberfläche 17. In Fig. 2 ist der Verlauf der Intensität des zur Kamera 18 reflektierten Lichts über der Breite der Wellpappebahn 1 aufgetragen. Im Bereich zwischen der Seitenkante 9 der Teil-Bahn 7 und der Rillung 3 erfolgt eine gleichmäßige Reflexion des Lichts zur Kamera. Der Verlauf der Lichtintensität des zur Mess-Kamera 18 reflektierten Lichts 19 ist also geradlinig. In dem dem erwähnten Bereich 21 konstanter Lichtintensität des reflektierten Lichts 19 zugewandten abfallenden Bereich 3a der Rillung ist der Lichteinfall - bezogen auf eine Breiteneinheit der Wellpappebahn 1 - geringer als zuvor, d. h. in diesem abfallenden Bereich 3a der Rillung 3 wird weniger Licht pro Breiteneinheit zur Kamera 18 reflektiert. Die Lichtintensität des zur Mess-Kamera 18 reflektierten Lichts 19 weist also einen gegenüber dem geradlinigen Bereich 21 nach unten abfallenden Bereich 22 auf. Im - bezogen auf die Richtung des Lichtbandes 14 - ansteigenden Bereich 3b der Rillung 3 wird mehr Licht pro Breiteneinheit der Wellpappebahn 1 zur Kamera 18 reflektiert; es ergibt sich also eine verstärkte Lichtintensität 23.

Im Bereich des Längsschnitts 6 ergibt sich zuerst eine stark reduzierte Lichtintensität 24 und anschließend eine geringfügig erhöhte Lichtintensität 25. Bei der Rillung 4 ergibt sich entsprechend wie bei der Rillung 3 im abfallenden Bereich 4a eine verringerte Lichtintensität 26 und im ansteigenden Bereich 4b der Rillung 4 eine erhöhte Lichtintensität 27 des zur Mess-Kamera 18 reflektierten Lichts 19. In allen zwischen den Rillungen 3, 4 und dem Längsschnitt 6 und allen zwischen den Seitenkanten 9, 10 und den benachbarten Rillungen 3, 4 befindlichen Bereichen der Oberfläche 17 ist - wie Fig. 2 erkennen lässt - eine gleichmäßige Lichtintensität gegeben. Die Mitte der Lichtintensitätsbereiche 22, 23 bzw. 24, 25 bzw. 26, 27 gibt daher jeweils genau die Mitte der Rillung 3, des Längsschnitts 6 und der Rillung 4 wieder; in der Kamera 18 wird ein entsprechendes Abbild erzeugt. An den Seitenkanten 9, 10 wird kein Licht reflektiert; der gesamte Lichtintensitätsverlauf nach Fig. 2 erstreckt sich also nur exakt über die Breite a der Wellpappebahn 1.

Das in der Kamera 18 elektronisch erzeugte exakte Abbild der Oberfläche 17 mit der genauen Lage der Rillungen 3, 4 und des Längsschnitts 6 wird zu einem Rechner 28 als Auswerte-Gerät zugeführt, in dem die Istwerte der Abstände b, c, d errechnet und beispielsweise auf einem Monitor 29 als Anzeige-Gerät angezeigt werden. Bei einem Abweichen von vorgegebenen Sollwerten kann der Bediener gegebenenfalls die erwähnte Rill- und Längsschneide-Vorrichtung nachstellen. Selbstverständlich können im Rechner 28 auch die Sollwerte gespeichert sein und ein Vergleich der Sollwerte mit den erwähnten Istwerten erfolgen, was dann gegebenenfalls zu einer automatischen Regelung der Rill- und Längsschneide-Vorrichtung eingesetzt werden kann. Der Vergleich der Istwerte mit den Sollwerten erfolgt über eine Datenschnittstelle zur Steuerung der Rill- und Längsschneide-Vorrichtung. Die Sollwerte werden dabei automatisch übermittelt.

Beiderseits der Wellpappebahn 1 sind ortsfeste Referenzpunkte 30, 31 angeordnet, die mit der Messlinie 20 fluchten. Diese Referenzpunkte 30, 31 haben einen exakten unveränderbaren Abstand f voneinander. Diese Referenzpunkte 30, 31 werden ebenfalls kontinuierlich von der Mess-Kamera 18 erfasst. Da insbesondere durch kleine Temperaturschwankungen winzige Verzerrungen im Objektiv der Mess-Kamera 18 oder in sonstigen für die Messgenauigkeit der Mess-Kamera 18 relevanten Bereichen eintreten können, führen solche Temperaturänderungen zu Messfehlern. Wenn jeweils der exakte Abstand f der Referenzpunkte 30, 31 erfasst wird, dann können die geschilderten Messwerte, d. h. die Lage der Rillungen 3, 4 und des Längsschnitts 6 und damit auch die entsprechenden Abstände b, c, d rechnerisch korrigiert werden. Damit können Fehler in der Berechnung der Abstände b, c, d im Bereich unterhalb von 0,5 mm gehalten werden.

## Patentansprüche

1. Vorrichtung zur Erfassung der Formatgenauigkeit einer in einer Transportrichtung (2) bewegten Wellpappebahn (1),
die mindestens eine obere Deckbahn (1a), und mehrere in Transportrichtung (2) verlaufende Profilierungen der oberen Deckbahn (1a), nämlich Seitenkanten (9, 10) und mindestens einen die Wellpappebahn (1) in Teil-Bahnen (7, 8) teilenden Längsschnitt (6) und/oder mindestens eine obere Rillung (3, 4) aufweist und
die zwischen den Profilierungen eben ausgebildet ist,
**gekennzeichnet durch**
eine Lichtquelle (13), die quer zur Transportrichtung (2) unter einem Winkel α zur Oberfläche (17) der oberen Deckbahn (1a) ein Lichtband (14) auf die Oberfläche (17) der oberen Deckbahn (1a) über deren Gesamtbreite a strahlt,
eine oberhalb der Wellpappebahn (1) angeordnete Mess-Kamera (18), die von der Oberfläche (17) reflektiertes Licht (19) aufnimmt und die Profilierungen aufgrund einer Lichtintensität (22, 23, 24, 25, 26, 27) des reflektierten Lichts (19) erfasst, die von der Lichtintensität (21) des von ebenen Bereichen der Oberfläche (17) reflektierten Lichts (19) abweicht und
ein der Mess-Kamera (18) nachgeordnetes Auswerte-Gerät zur Ermittlung des Abstandes b, c, d der mindestens zwei Profilierungen voneinander basierend auf den voneinander abweichenden Lichtintensitäten des zur Mess-Kamera (18) reflektierten Lichts (19).

2. Vorrichtung nach Anspruch 1, **dadurch gekennzeichnet,**
**dass** beiderseits der Wellpappebahn (1) je ein Referenzpunkt (30,31) mit konstantem Abstand f voneinander angeordnet sind, deren Abstand voneinander von der Mess-Kamera (18) kontinuierlich erfasst wird.

3. Vorrichtung nach Anspruch 1 oder 2, **dadurch gekennzeichnet,**
**dass** das für den Abstand e der Mess-Kamera (18) von einer durch das Auftreffen des Lichtbandes (14) auf die Oberfläche (17) der Wellpappebahn (1) gebildete Messlinie (20) in Bezug auf die Gesamtbreite a der Wellpappebahn (1) gilt: e ≥ a.

4. Vorrichtung nach einem der Ansprüche 1 bis 3, **dadurch gekennzeichnet,**
**dass** die Lichtquelle (13) seitlich der Wellpappebahn (1) angeordnet ist.

5. Vorrichtung nach einem der Ansprüche 1 bis 4, **dadurch gekennzeichnet,**
**dass** für den Winkel α gilt: 5° ≤ α ≤ 30°.

6. Vorrichtung nach einem der Ansprüche 1 bis 5, **dadurch gekennzeichnet,**
**dass** die Lichtquelle (13) angenähert paralleles Licht aussendet.

7. Vorrichtung nach einem der Ansprüche 1 bis 6, **dadurch gekennzeichnet,**
**dass** die Lichtquelle (13) durch eine Vielzahl von in einer geraden Reihe übereinander angeordneten LED's (15) gebildet ist.

## Claims

1. An apparatus for detection of the accuracy of format of a web of corrugated cardboard (1) moved in a conveying direction (2),
which corrugated cardboard (1) comprises at least an upper liner (1a) and several profiled patterns of the upper liner (1a), namely lateral edges (9, 10) and at least one of a longitudinal cut (6) dividing the web of corrugated cardboard (1) into partial webs (7, 8) and/or at least one upper groove (3, 4),
which corrugated cardboard (1) is planar between the profiled patterns,
**characterized by**
a light source (13) which emits a light band (14) to the surface (17) of the upper liner (1a) across the total width a thereof in a direction crosswise of the conveying direction (2) at an angle α to the surface (17) of the upper liner (1a),
a measuring camera (18) arranged above the web of corrugated cardboard (1) which absorbs light (19) reflected by the surface (17) and which detects the profiled patterns by means of a light intensity (22, 23, 24, 25, 26, 27) of the light (19) reflected by the profiled patterns, the light intensity (22, 23, 24, 25, 26, 27) of which deviating from a light intensity (21) of light (19) reflected by plane portions of the surface (17), and
an evaluation device connected to the measuring camera (18) for determination of the distance b, c, d of the at least two profiled patterns from each other on the basis of the differing light intensities of the light (19) reflected towards the measuring camera (18).

2. An apparatus according to claim 1, **characterized in that** on both sides of the web of corrugated cardboard (1) is arranged in each case one reference point (30, 31) with a constant distance f from each other whose distance f from each other is continuously detected by the measuring camera (18).

3. An apparatus according to claim 1 or 2, **characterized in that** for a distance e of the measuring camera (18) from a measuring line (20), formed by the incidence of the light band (14) on the surface (17) of the web of corrugated cardboard (1), relative to the total width a of the web of corrugated cardboard (1) e ≥ a applies.

4. An apparatus according to one of claims 1 to 3, **characterized in that** the light source (13) is arranged laterally of the web of corrugated cardboard (1).

5. An apparatus according to one of claims 1 to 4, **characterized in that** for the angle α 5°≤ α ≤ 30° applies.

6. An apparatus according to one of claims 1 to 5, **characterized in that** the light source (13) emits approximately parallel light.

7. An apparatus according to one of claims 1 to 6, **characterized in that** the light source (13) is formed by a plurality of LEDs (15) which are arranged one above the other in a straight row.

## Revendications

1. Dispositif destiné à la détermination du format précis d'une bande de carton ondulé (1) en mouvement dans une direction de transport (2),
qui présente au moins une bande de recouvrement supérieure (la), et plusieurs profils de la bande de recouvrement supérieure (la), s'étendant dans la direction de transport (2), à savoir des bords latéraux (9, 10) et au moins une découpe longitudinale (6) divisant la bande de carton ondulé (1) en bandes partielles (7, 8) et/ou au moins un rainurage supérieur (3, 4), et
qui est de configuration plane entre les profils,
**dispositif caractérisé par**
une source lumineuse (13) qui émet, transversalement à la direction de transport (2), à un angle α par rapport à la surface (17) de la bande de recouvrement supérieure (la), une bande lumineuse (14) sur la surface (17) de la bande de recouvrement supérieure (1a) sur toute la largeur a de celle-ci,
une caméra de mesure (18) disposée au-dessus de la bande de carton ondulé (1), qui reçoit la lumière (19) reflétée par la surface (17) et détecte les profils en fonction d'une intensité lumineuse (22, 23, 24, 25, 26, 27) de la lumière (19) reflétée, qui est différente de l'intensité lumineuse (21) de la lumière (19) reflétée par des régions planes de la surface (17), et
un dispositif d'évaluation placé en aval de la caméra de mesure (18) pour déterminer la distance b, c, d des au moins deux profils entre eux, sur la base des intensités lumineuses différentes de la lumière (19) reflétée vers la caméra de mesure (18).

2. Dispositif selon la revendication 1, **caractérisé en ce qu'**est disposé de chaque côté de la bande de carton ondulé (1) respectivement un point de référence (30, 31) avec un écartement mutuel f constant, dont la distance mutuelle f par rapport à la caméra de mesure (18) est détectée en continu.

3. Dispositif selon la revendication 1 ou 2, **caractérisé en ce que**, pour la distance e entre la caméra de mesure (18) et une ligne de mesure (20) formée par l'impact de la bande lumineuse (14) sur la surface (17) de la bande de carton ondulé (1), rapportée à la largeur totale a de la bande de papier ondulé (1), s'applique: e ≥ a.

4. Dispositif selon l'une des revendications 1 à 3, **caractérisé en ce que** la source lumineuse (13) est disposée sur le côté de la bande de carton ondulé (1).

5. Dispositif selon l'une des revendications 1 à 4, **caractérisé en ce que**, pour l'angle α, s'applique : 5° ≤ α ≤ 30°.

6. Dispositif selon l'une des revendications 1 à 5, **caractérisé en ce que** la source lumineuse (13) émet une lumière sensiblement parallèle.

7. Dispositif selon l'une des revendications 1 à 6, **caractérisé en ce que** la source lumineuse (13) est formée par une pluralité de LEDs (15) disposées les unes au-dessus des autres sur une rangée linéaire.
